# EUROPEAN PATENT APPLICATION

(11) **EP 1 595 963 A1**
(43) Date of publication of application: **16.11.2005**
(21) Application number: 04713189.1
(22) Date of filing: 20.02.2004
(51) Int. Cl.: C22C 19/05, H01M 8/10, H01M 8/24, H01M 8/02

(54) **Ni BASE ALLOY**

(30) Priority: 21.02.2003 JP 2003044416; 21.02.2003 JP 2003044417; 04.02.2004 JP 2004027444
(71) Applicant: MITSUBISHI MATERIALS CORPORATION, Chiyoda-ku, Tokyo 100-8117 (JP)
(72) Inventor: SUGAHARA, Katsuo, Mitsubishi Materials Corporation, Kitamoto-shi, Saitama 364-0023 (JP)
(74) Representative: Gille Hrabal Struck Neidlein Prop Roos
(86) International application number: PCT/JP2004/001995
(87) International publication number: WO 2004/074528

(57) **Abstract**

A nickel-base alloy comprising, by mass, at least 29% but less than 42% chromium, more than 1 and not more than 3% tantalum, 0.001 to 0.05% magnesium, 0.001 to 0.04% nitrogen and 0.05 to 0.5% manganese, with the balance being nickel and inadvertent impurities. A nickel-base alloy comprising, by mass, more than 43% and not more than 50% chromium, 0.1 to 2% molybdenum, 0.001 to 0.05% magnesium, 0.001 to 0.04% nitrogen, and 0.05 to 0.5% manganese, with the balance being nickel and inadvertent impurities. The amount of carbon included as inadvertent impurities is not more than 0.05%.

## Description

### TECHNICAL FIELD

### Field of the Invention

The present invention relates to nickel-base alloys. Priority is claimed on Japanese Patent Application No. 2003-44416, Japanese Patent Application No. 2003-44417 and Japanese Patent Application No. 2004-27444, the contents of which are incorporated herein by reference.

### BACKGROUND ART

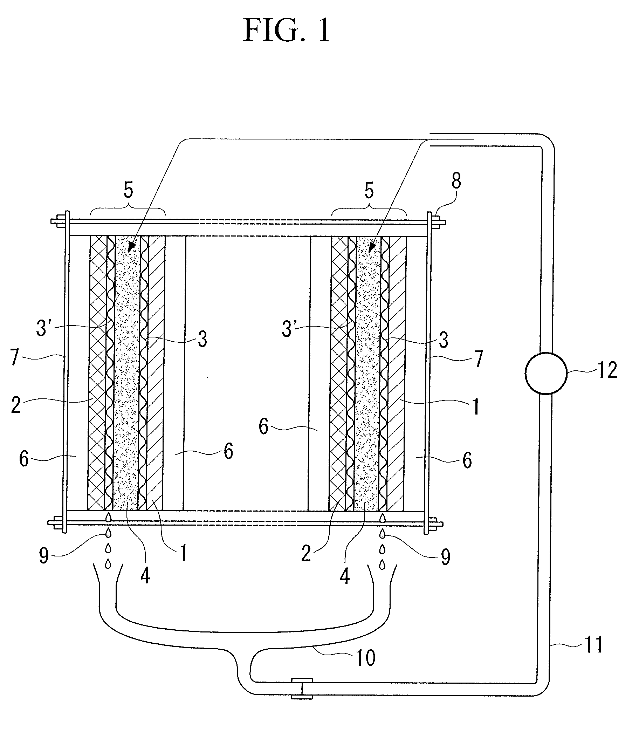

Polymer electrolyte fuel cells which operate at low temperatures ranging from room temperature to 80°C can be built to compact dimensions and thus are expected to be used in automotive and portable fields. Development work on such fuel cells is proceeding rapidly. FIG. 1 schematically shows the construction of such a polymer electrolyte fuel cell, which includes hydrogen electrodes 1, oxygen electrodes 2, first platinum catalysts 3 and second platinum catalysts 3', solid electrolyte membranes (proton exchange membrane) 4, and unit cells 5. Each unit cell 5 has a solid electrolyte membrane 4, on either side of which is provided a first platinum catalyst 3 and a second platinum catalyst 3'. A hydrogen electrode I is provided outside of the first platinum catalyst 3, and an oxygen electrode 2 is provided outside of the second platinum catalyst 3'. In order to stack these unit cells 5 together with intervening separators 6 to form the polymer electrolyte fuel cell, a plurality of unit cells 5 are stacked with separators 6 therebetween by using at least two support plates 7 and fasteners 8 such as bolts and nuts.

Power generation principle within a unit cell 5 of the polymer electrolyte fuel cell having this type of construction takes place as follows. Hydrogen obtained from natural gas, methanol or the like is supplied to the hydrogen electrode 1, where the first platinum catalyst 3 on the hydrogen electrode 1 side is used to decompose the hydrogen into hydrogen ions and electrons. The electrons are led out as electricity to the exterior, flow through an external load circuit (not shown), and reach the oxygen electrode 2. The hydrogen ions pass through a solid electrolyte membrane 4 composed of a polymer electrolyte -type ion-exchange membrane that allows only hydrogen ions to pass through, and migrate to the oxygen electrode 2 side. On the oxygen electrode 2 side, the hydrogen ions, electrons and oxygen react under the influence of the second platinum catalyst 3' to form water. The role of the solid electrolyte membrane 4 is to allow hydrogen gas to pass through as hydrogen ions, for which it needs to be wet. Because the hydrogen ions, electrons and oxygen react to form water on the oxygen electrode 2 side, keeping the solid electrolyte membrane 4 wet is not a problem. However, the hydrogen electrode 1 side which is separated from the oxygen electrode 2 side by the solid electrolyte membrane 4 is not in this way supplied with water and thus ends up dry. Hence, to ensure the wetness of the solid electrolyte membrane 4 on the hydrogen electrode 1 side, water 9 discharged from the oxygen electrode 2 side is received by a manifold 10, passed through a pipe 11, and supplied with the aid of a pump 12 to the solid electrolyte membrane 4 on the hydrogen electrode 1 side.

As just described, the water 9 discharged from the oxygen electrode 2 side is received by the manifold 10, passed through the pipe 11, and fed by means of a pump 12 to the solid electrolyte membrane 4 on the hydrogen electrode 1 side, thereby ensuring the wetness of the solid electrolyte membrane 4 on the hydrogen electrode 1 side. However, because the solid electrolyte membrane 4 used in polymer electrolyte fuel cells generally has been administered sulfonation treatment, the water 9 discharged from the oxygen electrode 2 side has sulfonic acid acidity and is thus mildly corrosive. Hence, there is a need for the manifolds 10 and pipes 11 which receive water 9 to be corrosion resistant.

In some cases, the solid electrolyte membranes used in polymer electrolyte fuel cells have been subjected to fluorination rather that sulfonation treatment. The water 9 discharged from the oxygen electrode 2 side will as a result have hydrofluoric acid acidity. In such cases, there will similarly be a need for the manifolds 10 and pipes 11 which receive water 9 to be corrosion resistant.

In addition, throughholes (not shown) are provided in the hydrogen electrode I and the oxygen electrode 2. The sulfonic acid acidic or hydrofluoric acid acidic water 9 that is discharged from the oxygen electrode 2 side passes through the throughholes (not shown) and comes into contact with the separator 6. Moreover, the sulfonic acid acidic or hydrofluoric acid acidic water 9 that is discharged from the oxygen electrode 2 side, recirculated, and reaches the hydrogen electrode 1 side also passes through the throughholes (not shown) and comes into contact with the separator 6. Hence, corrosion resistance is required also of the separators 6.

These components such as manifolds 10, pipes 11 and separators 6 that require corrosion resistance are generally made of a stainless steel such as SUS316L. In addition, the sulfuric acid acidic or hydrofluoric acid acidic water produced on the oxygen electrode 2 side disperses and settles on the support plates 7, fasteners 8 such as bolts and nuts, and the like, corrode these as well. Therefore, stainless steels such as SUS316L are also used in the support plates 7 and fasteners 8 such as bolts and nuts. That is, stainless steels such as SUS316L are known to be used in the structural members, excluding unit cells 5, for assembling polymer electrolyte fuel cells, such as support plates 7, fasteners 8, manifolds 10, pipes 11 and separators 6 (collectively referred to hereinafter as "structural members for polymer electrolyte fuel cells") (see, for example, JP-A No. 2001-6714, JP-A No. 2000-299121, JP-A No. 2000-331696 and the like).

At a corrosion rate of less than 0.1 mm/year, structural members for polymer electrolyte fuel cel ls are generally rated as "excellent" and the corrosion resistance of the stainless steel is also generally rated as "excellent." However, a elution amount of metal ions from stainless steel is large. Such metal ions that have leached from the stainless steel degrade the solid electrolyte membrane, which can dramatically shorten the life of the polymer electrolyte fuel cell. Accordingly, there has existed a desire for the development of metal materials that undergo very little leaching of metal ions.

### DISCLOSURE OF INVENTION

It is therefore an object of the present invention to provide a nickel-base alloy which achieves very little elution amount of ions in the environment wherein the polymer electrolyte fuel cell is formed. Another object of this invention is to provide structural members for forming polymer electrolyte fuel cells, which structural members are composed of a nickel-base alloy that undergoes very little leaching of ions in the polymer electrolyte fuel cell environment wherein the environment is used when stacking unit cells of the polymer electrolyte fuel cells for forming assembly.

As a result of extensive investigations conducted on ways of obtaining metal materials that undergo very little leaching of metal ions in an environment for forming a polymer electrolyte fuel cell, we have found that nickel-base alloys which include at least 29% but less than 42% (all percentages here and below are by weight) of chromium. The nickel-base alloys include more than 1% and not more than 3% of tantalum, 0.001 to 0.05% magnesium, 0.001 to 0.04% nitrogen and 0.05 to 0.5% manganese, and furthermore optionally may include one or more from among 0.1 to 2% molybdenum, 0.05 to 1.0% iron and 0.01 to 0.1% silicon. The balance of the nickel-base alloys are nickel and unavoidable inadvertent impurities. The nickel-base alloys, which have a composition wherein the carbon contained as inadvertent impurities is set to 0.05% or less, have a corrosion rate of less than 0.1 mm/year in the environment for forming a polymer electrolyte fuel cell. Furthermore, the nickel-base alloys achieve very little leaching of ions in the environment for forming a polymer electrolyte fuel cell. We have thus learned that these nickel-base alloys have effects, in structural members for forming the polymer electrolyte fuel cells, that are even better than those of prior-art materials such as stainless steels.

We have also discovered that nickel-base alloys which include at least 43% and not more than 50% of chromium. The nickel-base alloys include 0. 1 to 2% molybdenum, 0.001 to 0.05% magnesium, 0.001 to 0.04% nitrogen and 0.05 to 0.5% manganese, and which optionally may include one or both 0.05 to 1.0% iron and 0.01 to 0.1% silicon. The balance of the nickel-base alloys is nickel and unavoidable inadvertent impurities. The nickel-base alloys which moreover have a composition wherein the carbon contained as inadvertent impurities is set to 0.05% or less have a corrosion rate of less than 0.1 mm/year in the environment for forming a polymer electrolyte fuel cell. The nickel-base alloys achieve very little leaching of ions in the environment for forming a polymer electrolyte fuel cell. We have thus learned that these nickel-base alloy have effects, in structural members for forming the polymer electrolyte fuel cells, that are even better than those of prior-art materials such as stainless steels.

The first to sixth aspects of the invention are based on these findings.

In a first aspect, the invention provides:
(1) a nickel-base alloy comprising, by mass, at least 29% but less than 42% chromium, more than 1% and not more than 3% tantalum, 0.001 to 0.05% magnesium, 0.001 to 0.04% nitrogen and 0.05 to 0.5% manganese, with the balance being nickel and inadvertent impurities, the amount of carbon included in the alloy as inadvertent impurities being not more than 0.05%.
   In a second aspect, the invention provides:
(2) a nickel-base alloy comprising, by mass, at least 29% but less than 42% chromium, more than 1% and not more than 3% tantalum, 0.001 to 0.05% magnesium, 0.001 to 0.04% nitrogen, 0.05 to 0.5% manganese and 0.1 to 2% molybdenum, with the balance being nickel and inadvertent impurities, the amount of carbon included in the alloy as inadvertent impurities being not more than 0.05%.
   In a third aspect, the invention provides:
(3) a nickel-base alloy comprising, by mass, at least 29% but less than 42% chromium, more than 1% and not more than 3% tantalum, 0.001 to 0.05% magnesium, 0.001 to 0.04% nitrogen, 0.05 to 0.5% manganese, and one or both of 0.05 to 1.0% iron and 0.01 to 0.1% silicon, with the balance being nickel and inadvertent impurities, the amount of carbon included in the alloy as inadvertent impurities being not more than 0.05%.
   In a fourth aspect, the invention provides:
(4) a nickel-base alloy comprising, by mass, at least 29% but less than 42% chromium, more than 1% and not more than 3% tantalum, 0.001 to 0.05% magnesium, 0.001 to 0.04% nitrogen, 0.05 to 0.5% manganese, 0.1 to 2% molybdenum, and one or both of 0.05 to 1.0% iron and 0.01 to 0.1% silicon, with the balance being nickel and inadvertent impurities, the amount of carbon included in the alloy as inadvertent impurities being not more than 0.05%.
(5) The nickel-base alloy of the above first, second, third or fourth aspect may be included in, or make up all of, a structural member for a polymer electrolyte fuel cell.
(6) The nickel-base alloy of the above first, second, third or fourth aspect may be included in, or make up all of, a manifold member for a polymer electrolyte fuel cell.
(7) The nickel-base alloy of the above first, second, third or fourth aspect may be included in, or make up all of, a pipe member for a polymer electrolyte fuel cell.
(8) The nickel-base alloy of the above first, second, third or fourth aspect may be included in, or make up all of, a fastener member for a polymer electrolyte fuel cell.
(9) The nickel-base alloy of the above first, second, third or fourth aspect may be included in, or make up all of, a support plate member for a polymer electrolyte fuel cell.
(10) The nickel-base alloy of the above first, second, third or fourth aspect may be included in, or make up all of, a separator member for a polymer electrolyte fuel cell.
   In a fifth aspect, the invention provides (11) a nickel-base alloy comprising, by mass, more than 43% and not more than 50% chromium, 0.1 to 2% molybdenum, 0.001 to 0.05% magnesium, 0.001 to 0.04% nitrogen, and 0.05 to 0.5% manganese, with the balance being nickel and inadvertent impurities, the amount of carbon included in the alloy as inadvertent impurities being not more than 0.05%.
   In a sixth aspect, the invention provides (12) a nickel-base alloy comprising, by mass, more than 43% and not more than 50% chromium, 0.1 to 2% molybdenum, 0.001 to 0.05% magnesium, 0.001 to 0.04% nitrogen, 0.05 to 0.5% manganese, and one or both of 0.05 to 1.0% iron and 0.01 to 0.1% silicon, with the balance being nickel and inadvertent impurities, the amount of carbon included in the alloy as inadvertent impurities being not more than 0.05%.
   Because the nickel-base alloys of the fifth and sixth aspects undergo very little leaching of ions in the environment for forming a polymer electrolyte fuel cell, they are particularly effective as structural members for the assembly of polymer electrolyte fuel cell, such as support plates 7, fasteners 8, manifolds 10, pipes 11 and separators 6. Accordingly, the following inventions are also provided.
(13) The nickel-based alloy of the above fifth or sixth aspect may be included in, or make up all of, a structural member for a polymer electrolyte fuel cell.
(14) The nickel-based alloy of the above fifth or sixth aspect may be included in, or make up all of, a manifold member for a polymer electrolyte fuel cell.
(15) The nickel-based alloy of the above fifth or sixth aspect may be included in, or make up all of, a pipe member for a polymer electrolyte fuel cell.
(16) The nickel-based alloy of the above fifth or sixth aspect may be included in, or make up all of, a fastener member for a polymer electrolyte fuel cell.
(17) The nickel-based alloy of the above fifth or sixth aspect may be included in, or make up all of, a support plate member for a polymer electrolyte fuel cell.
(18) The nickel-based alloy of the above fifth or sixth aspect may be included in, or make up all of, a separator member for a polymer electrolyte fuel cell.

### BRIEF DESCRIPTION OF THE DIAGRAMS

FIG. 1 is a schematic view showing the construction of a polymer electrolyte fuel cell.

### BEST MODE FOR CARRYING OUT THE INVENTION

Limits for each element in the compositions of the nickel-base alloys according to the first to fourth aspects which undergo very little leaching of ions in the environment for forming a polymer electrolyte fuel cell are explained below in detail.

### Chromium and Tantalum:

In an environment for forming a polymer electrolyte fuel cell containing a trace amount of hydrofluoric acid, the presence of both chromium and tantalum dramatically increases corrosion resistance. At least 29% chromium must be present in such cases. However, the presence of 42% or more chromium, in combination with tantalum, makes the formation of a single phase difficult to achieve and increases the amount of metal ions that leach out, which is undesirable. Hence, the chromium content has been set to at least 29% but less than 42%. A chromium content of 35 to 41% is preferred.

Similarly, the tantalum content must be more than 1%. However, the presence of more than 3% tantalum, in combination with chromium, compromises the phase stability and increases the amount of metal ions that leach out, which is undesirable. Accordingly, the tantalum content has been set to more than 1% and not more than 3%. A tantalum content of at least 1.1 but less than 2.5% is preferred.

### Nitrogen, Manganese and Magnesium:

The presence of nitrogen, manganese and magnesium serves to improve the phase stability. That is, nitrogen, manganese and magnesium stabilize the Ni-fcc phase which is the matrix, thus promoting the entry of chromium into a solid solution and discouraging the deposition of a second phase. However, at a nitrogen content of less than 0.00 1 %, there is no phase stabilizing effect. On the other hand, when more than 0.04% nitrogen is present, nitrides form and the leaching of metal ions in the environment for forming a polymer electrolyte fuel cell increases. Hence, the nitrogen content has been set at 0.001 to 0.04%, and preferably 0.005 to 0.03%.

Likewise, at a manganese content of less than 0.05%, there is no phase stabilizing effect, whereas the presence of more than 0.5% increases the leaching of metal ions in an environment for forming a polymer electrolyte fuel cell. Hence, the manganese content has been set at 0.05 to 0.5%, and preferably 0.1 to 0.4%.

Similarly, at a magnesium content of less than 0.001%, there is no phase stabilizing effect, whereas the presence of more than 0.05% increases the leaching of metal ions in an environment for forming a polymer electrolyte fuel cell. Hence, the magnesium content has been set at 0.001 to 0.05%, and preferably 0.002 to 0.04%.

### Molybdenum:

Molybdenum has the effect in particular of suppressing an increase in the leaching of metal ions when the sulfuric acid concentration rises within an environment for forming a polymer electrolyte fuel cell containing a trace amount of sulfuric acid. Molybdenum is thus added as an optional ingredient. It is effective at a concentration of at least 0.1%, but if more than 2% is present, the phase stability deteriorates, discouraging entry of the Cr-bcc phase into a solid solution. As a result, microcells form between the Ni-fcc phase serving as the matrix and the Cr-bcc phase, which has the undesirable effect of increasing the leaching of metal ions. Accordingly, the level of molybdenum included in the nickel-base alloy of this invention has been set at 0.1 to 2%. A range of more than 0.1 but less than 0.5% is preferred.

### Iron and Silicon:

Iron and silicon have strength-enhancing effects and are thus added as optional ingredients. Iron is effective at a content of 0.05% or more, but when present at above 1%, the leaching of metal ions in an environment for forming a polymer electrolyte fuel cell increases. Hence, the iron content has been set at 0.05 to 1%, and preferably at least 0.1% but less than 0.5%.

Similarly, silicon is effective at a content of 0.01% or more, but when present at above 0.1%, the leaching of metal ions in an environment for forming a polymer electrolyte fuel cell increases. Hence, the silicon content has been set at 0.01 to 0.1%, and preferably 0.02 to 0.05%.

### Carbon:

Carbon is present as an inadvertent impurity. The presence of a large amount of carbon results in the formation of a carbide with chromium in the vicinity of crystal grain boundaries, increasing the leaching of metal ions. Therefore, the lower the carbon content the better. Hence, the upper limit in the carbon content present among inadvertent impurities has been set at 0.05%. A carbon content of 0% is preferred. The carbon content may be substantially from 0.001 to 0.05%.

Next, limits for each element in the compositions of the nickel-base alloys according to the fifth and sixth aspects which undergo very little leaching of ions in the environment for forming a polymer electrolyte fuel cell are explained below in detail.

### Chromium:

In an environment for forming a polymer electrolyte fuel cell containing a trace amount of sulfuric acid, chromium is effective for suppressing the leaching of metal ions. In such cases, the presence of more than 43% is required, but machining becomes difficult at a level of more than 50%. Accordingly, the chromium present in the nickel-base alloy of this invention has been set to more than 43% and not more than 50%. A chromium content of 43.1 to 47% is preferred.

### Molybdenum:

Molybdenum has the effect in particular of suppressing an increase in the leaching of metal ions when the sulfuric acid concentration rises within an environment for forming a polymer electrolyte fuel cell containing a trace amount of sulfuric acid. It is effective when present in a concentration of at least 0.1%, but at a concentration of more than 2%, the phase stability deteriorates, discouraging entry of the Cr-bcc phase into solid solution. As a result, microcells form between the Ni-fcc phase serving as the parent phase and the Cr-bcc phase, resulting in an increase in the leaching of metal ions. Accordingly, the molybdenum content in the nickel-base alloy of this invention has been set at 0.1 to 2%. A range of more than 0.1% but less than 0.5% is preferred.

### Nitrogen, Manganese and Magnesium:

The presence of nitrogen, manganese and magnesium serves to improve the phase stability. That is, nitrogen, manganese and magnesium stabilize the Ni-fcc phase which is the matrix, thus promoting the entry of chromium into a solid solution and discouraging the deposition of a second phase. However, at a nitrogen content of less than 0.001 %, there is no phase stabilizing effect. On the other hand, when more than 0.04% is present, nitrides form and the leaching of metal ions in the environment for forming a polymer electrolyte fuel cell increases. Hence, the nitrogen content has been set at 0.001 to 0.04%, and preferably 0.005 to 0.03%.

Likewise, at a manganese content of less than 0.05%, there is no phase stabilizing effect, whereas the presence of more than 0.5% increases the leaching of metal ions in an environment for forming a polymer electrolyte fuel cell. Hence, the manganese content has been set at 0.05 to 0.5%, and preferably 0.1 to 0.4%.

Similarly, at a magnesium content of less than 0.001%, there is no phase stabilizing effect, whereas the presence of more than 0.05% increases the leaching of metal ions in an environment for forming a polymer electrolyte fuel cell. Hence, the magnesium content has been set at 0.001 to 0.05%, and preferably 0.002 to 0.04%.

### Iron and Silicon:

Iron and silicon have strength-enhancing effects and are thus added as optional ingredients. Iron is effective at a content of 0.05% or more, but when present at above 1%, the leaching of metal ions in an environment for forming a polymer electrolyte fuel cell increases. Hence, the iron content has been set at 0.05 to 1%, and preferably at least 0.1% but less than 0.5%.

Similarly, silicon is effective at a content of 0.01% or more, but when present at above 0.1%, the leaching of metal ions in an environment for forming a polymer electrolyte fuel cell increases. Hence, the silicon content has been set at 0.01 to 0.1%, and preferably 0.02 to 0.05%.

### Carbon:

Carbon is present as an inadvertent impurity. Carbon forms a carbide with chromium in the vicinity of crystal grain boundaries, increasing the leaching of metal ions. Therefore, the lower the carbon content the better. Hence, the upper limit in the carbon content present among inadvertent impurities has been set at 0.05%. A carbon content of 0% is preferred. The carbon content may be substantially from 0.001 to 0.05%.

### EXAMPLES

### Experiment I (First to Fourth Aspects of the Invention):

In each example, low carbon-content starting materials were prepared. These starting materials were melted and cast in an ordinary high-frequency melting furnace to produce nickel-base alloy ingots having a thickness of 12 mm. These ingots were subjected to homogenizing heat treatment at 1230°C for 10 hours. Next, while maintaining the temperature within a range of 1000 to 1230°C, the ingots were reduced to a final thickness of 5 mm by hot rolling at a thickness reduction rate of 1 mm per pass. The resulting plates were then subjected to solid solution treatment in which they were held at 1200°C for 30 minutes then water quenched. Next, the surfaces were buffed, giving nickel-base alloy plates 1 to 20 according to the invention (Examples 1 to 20) and comparative nickel-base alloy plates I to 10 (Comparative Examples 1 to 10).

In a similar process, low carbon-content starting materials were melted and cast in an ordinary high-frequency melting furnace, thereby producing nickel-base alloy precision-cast ingots having a thickness of 5 mm. These ingots were subjected to homogenizing heat treatment at 1230°C for 10 hours, then were water quenched. This procedure yielded a nickel-base alloy plate 21 according to the invention (Example 21) having the ingredient composition shown in Table 2.

A prior-art alloy plate 1 (Prior-Art Example 1) made of SUS304 stainless steel and having a thickness of 5 mm and a prior-art alloy plate 2 (Prior-Art Example 2) made of SUS316L stainless steel and of the same thickness were also prepared.

These nickel-base alloy plates 1 to 21 (Examples), comparative nickel-base alloy plates 1-10 (Comparative Examples) and prior-art alloy plates 1 and 2 (Prior-Art Examples) were each cut into test pieces having a length of 10 mm and a width of 50 mm. The test pieces were surface polished by finishing with waterproof emery paper #400, following which they were ultrasonically degreased in acetone for five minutes.

A 1,000 ppm H₂SO₄ solution and a 500 ppm H₂SO₄ solution were prepared as test solutions which simulate the sulfuric acid acidic water that forms in the environment for forming a polymer electrolyte fuel cell. A 500 ppm HF solution and a 50 ppm HF solution were also prepared as test solutions which simulate the hydrofluoric acid acidic water that forms in the environment for forming a polymer electrolyte fuel cell. In addition, polypropylene test containers were prepared for use.

The test pieces from nickel-base alloy plates 1 to 21 (Examples), comparative nickel-base alloy plates I to 10 (Comparative Examples) and prior-art alloy plates 1 and 2 (Prior-Art Examples) were individually placed, together with 200 ml portions of the test solutions prepared above, in the polypropylene test containers. These were then vacuum degassed in a glove box, and sealed by closure with a lid within a hydrogen atmosphere. The sealed polypropylene test containers were placed in a test chamber set at 80°C and held therein for 500 hours.

The polypropylene test containers were subsequently removed and cooled, following which the elements that leached out into the H₂SO₄ solutions and the HF solutions were quantitatively determined by inductively coupled plasma emission spectroscopy, and the total amount of metal ions that leached from each test piece was measured. This total amount of leached metal ions was divided by the surface area of the test piece to give the amount of leached metal ions per unit surface area. The results are shown in Tables 3 and 4.

**Table 1**

| Ni-base alloy plate | Ingredient composition (wt %) | | | | | | | | | |
|---|---|---|---|---|---|---|---|---|---|---|
| | Cr | Ta | Mg | N | Mn | Mo | Fe | Si | C# | Ni and inadvertent impurities |
| EX 1 | 30.7 | 2.01 | 0.016 | 0.012 | 0.18 | -- | 0.12 | 0.021 | 0.02 | balance |
| EX 2 | 29.3 | 2.41 | 0.014 | 0.008 | 0.24 | -- | -- | -- | 0.02 | balance |
| EX 3 | 41.6 | 1.01 | 0.019 | 0.011 | 0.14 | -- | -- | -- | 0.01 | balance |
| EX 4 | 37.6 | 1.11 | 0.01 | 0.021 | 0.29 | -- | -- | -- | 0.02 | balance |
| EX 5 | 33.4 | 2.96 | 0.012 | 0.013 | 0.14 | -- | -- | -- | 0.02 | balance |
| EX 6 | 37.6 | 1.48 | 0.001 | 0.014 | 0.19 | -- | -- | -- | 0.02 | balance |
| EX 7 | 34.2 | 2.36 | 0.049 | 0.007 | 0.16 | -- | -- | -- | 0.02 | balance |
| EX 8 | 34.7 | 2.34 | 0.016 | 0.002 | 0.17 | -- | -- | -- | 0.01 | balance |
| EX 9 | 36.4 | 1 .87 | 0.023 | 0.039 | 0.11 | -- | -- | -- | 0.02 | balance |
| EX 10 | 35.2 | 1.96 | 0.026 | 0.025 | 0.05 | -- | -- | -- | 0.02 | balance |
| EX 11 | 35.3 | 2.38 | 0.021 | 0.018 | 0.49 | -- | -- | -- | 0.02 | balance |
| EX 12 | 33.6 | 1.77 | 0.018 | 0.029 | 0.24 | 0.11 | -- | -- | 0.02 | balance |
| EX 13 | 34.8 | 1.98 | 0.015 | 0.020 | 0.16 | 1.98 | -- | -- | 0.02 | balance |
| EX 14 | 34.1 | 1.76 | 0.033 | 0.025 | 0.1 | -- | 0.5 | -- | 0.02 | balance |
| EX 15 | 33.7 | 1.87 | 0.031 | 0.030 | 0.16 | -- | 0.99 | -- | 0.02 | balance |
| EX 16 | 34.8 | 2.34 | 0.026 | 0.017 | 0.38 | -- | -- | 0.01 | 0.02 | balance |
| EX 17 | 34.8 | 2.17 | 0.028 | 0.021 | 0.18 8 | -- | -- | 0.09 | 0.03 | balance |
| C# indicates the amount of carbon included as inadvertent impurities. | | | | | | | | | | |

**Table 2**

| Ni-base alloy plate | Ingredient composition (wt %) | | | | | | | | | |
|---|---|---|---|---|---|---|---|---|---|---|
| | Cr | Ta | Mg | N | Mn | Mo | Fe | Si | C# | Ni and inadvertent impurities |
| EX 18 | 32.5 | 2.27 | 0.030 | 0.006 | 0.26 | 0.21 | 0.14 | -- | 0.02 | balance |
| EX 19 | 35.1 | 1.75 | 0.032 | 0.028 | 0.23 | -- | 0.33 | 0.06 | 0.01 | balance |
| EX 20 | 34.1 | 1.69 | 0.021 | 0.013 | 0.11 | 0.22 | -- | 0.04 | 0.02 | balance |
| EX 21 | 34.7 | 1.76 | 0.023 | 0.027 | 0.39 | 0.31 | 0.24 | 0.03 | 0.01 | balance |
| CE 1 | 28.5* | 1.56 | 0.018 | 0.032 | 0.24 | -- | -- | -- | 0.02 | balance |
| CE 2 | 43.5* | 1.86 | 0.015 | 0.035 | 0.21 | -- | -- | -- | 0.02 | balance |
| CE 3 | 32.5 | 0.9* | 0.014 | 0.034 | 0.13 | -- | -- | -- | 0.02 | balance |
| CE 4 | 35.0 | 3.30* | 0.017 | 0.022 | 0.27 | -- | -- | -- | 0.01 | balance |
| CE 5 | 36.2 | 1.83 | --* | 0.012 | 0.38 | -- | -- | -- | 0.02 | balance |
| CE 6 | 35.4 | 1.62 | 0.055* | 0.015 | 0.22 | -- | -- | -- | 0.02 | balance |
| CE 7 | 35.7 | 1.45 | 0.022 | --* | 0.09 | -- | -- | -- | 0.02 | balance |
| CE 8 | 34.8 | 1.67 | 0.024 | 0.045* | 0.37 | -- | -- | -- | 0.01 | balance |
| CE 9 | 36.1 | 1.45 | 0.016 | 0.019 | 0.04* | -- | -- | -- | 0.01 | balance |
| CE 10 | 34.2 | 1.57 | 0.017 | 0.028 | 0.55* | -- | | -- | 0.02 | balance |
| Prior-Art Example I | SUS304 | | | | | | | | | |
| Prior Art Example 2 | SUS316L | | | | | | | | | |
| C# indicates the amount of carbon included as inadvertent impurities. | | | | | | | | | | |

| | | | | | | | | | | |
|---|---|---|---|---|---|---|---|---|---|---|
| *An asterisk indicates a value outside the compositional range of the invention. | | | | | | | | | | |

**Table 3**

| Ni-base alloy | Amount of metal ions leached by 1,000 ppm H₂SO₄ solution (ppm/cm²) | Amount of metal ions leached by 500 ppm H₂SO₄ solution (ppm/cm²) | Amount of metal ions leached by 500 ppm HF solution (ppm/cm²) | Amount of metal ions leached by 50 ppm HF solution (ppm/cm²) |
|---|---|---|---|---|
| Example 1 | 1.01 | 0.19 | 0.42 | 0.18 |
| Example 2 | 1.18 | 0.19 | 0.41 | 0.21 |
| Example 3 | 0.30 | 0.08 | 0.24 | 0.05 |
| Example 4 | 0.42 | 0.1 | 0.31 | 0.07 |
| Example 5 | 0.86 | 0.10 | 0.24 | 0.15 |
| Example 6 | 0.49 | 0.12 | 0.28 | 0.09 |
| Example 7 | 0.77 | 0.12 | 0.27 | 0.13 |
| Example 8 | 0.74 | 0.12 | 0.26 | 0.13 |
| Example 9 | 0.60 | 0.12 | 0.27 | 0.10 |
| Example 10 | 0.67 | 0.13 | 0.28 | 0.12 |
| Example 11 | 0.72 | 0.11 | 0.25 | 0.12 |
| Example 12 | 0.74 | 0.15 | 0.34 | 0.13 |
| Example 13 | 0.69 | 0.13 | 0.29 | 0.12 |
| Example 14 | 0.70 | 0.15 | 0.33 | 0.12 |
| Example 15 | 0.74 | 0.15 | 0.33 | 0.13 |
| Example 16 | 0.74 | 0.12 | 0.26 | 0.13 |
| Example 17 | 0.72 | 0.13 | 0.27 | 0.12 |
| Example 18 | 0.87 | 0.15 | 0.32 | 0.15 |
| Example 19 | 0.65 | 0.14 | 0.31 | 0.11 |
| Example 20 | 0.69 | 0.15 | 0.34 | 0.12 |
| Example 21 | 0.67 | 0.14 | 0.31 | 0.12 |

**Table 4**

| Ni-base alloy | Amount of metal ions leached by 1,000 ppm l H₂SO₄ solution ppm (ppm/cm²) | Amount of metal ions leached by 500 ppm H₂SO₄ solution (ppm/cm²) | Amount of metal ions leached by 500 ppm HF solution (ppm/cm²) | Amount of metal ions eached by 50 ppm HF solution (ppm/cm²) |
|---|---|---|---|---|
| Comp. Ex.1 | 3.65 | 1.98 | 3.88 | 2.12 |
| Comp.Ex.2 | 2.01 | 0.96 | 2.45 | 1.02 |
| Comp. Ex. 3 | 2.63 | 1.56 | 1.36 | 0.99 |
| Comp. Ex. 4 | 1.98 | 1.05 | 1.88 | 0.87 |
| Comp. Ex. 5 | cracks arose during test piece fabrication | | | |
| Comp. Ex. 6 | 2.12 | 0.98 | 2.19 | 0.87 |
| Comp. Ex. 7 | cracks arose during test piece fabrication | | | |
| Comp. Ex. 8 | 3.36 | 1.12 | 2.45 | 1.14 |
| Comp. Ex. 9 | cracks arose during test piece fabrication | | | |
| Comp. Ex. 10 | 2.31 | 1.12 | 3.20 | 1.26 |
| Prior-Art Example 1 | 56.2 | 19.8 | 72.1 | 18.8 |
| Prior-Art Example 2 | 33.3 33.3 | 10.2 10.2 | 36.8 36.8 | 9.4 9.4 |

As is apparent from the results shown in Tables 1 to 4, the nickel-base alloy plates in Examples 1 to 21 according to the first to fourth aspects of the invention have much lower amounts of metal ions leached per unit surface area of the test pieces than the alloy plates 1 and 2 in Prior-Art Examples 1 and 2. The test pieces from the nickel-base alloy plates in Comparative Examples 10 to 10, which fall outside the scope of this invention, either had somewhat high amounts of metal ions leached or gave rise to cracks during machining of the test plates.

### Experiment 2 (Fifth and Sixth Aspects of the Invention):

In each example, low carbon-content starting materials were prepared. These starting materials were melted and cast in an ordinary high-frequency induction furnace, thereby producing 12 mm thick ingots of the ingredient compositions shown in Tables 5 to 7. These ingots were subjected to homogenizing heat treatment at 1230°C for 10 hours. Next, while maintaining the temperature within a range of 1000 to 1230°C, the ingots were reduced to a final thickness of 5 mm by hot rolling at a thickness reduction rate of 1 mm per pass. The resulting plates were then subjected to solution heat treatment in which they were held at 1200°C for 30 minutes then water quenched. Next, the surfaces were buffed, giving nickel-base alloy plates 22 to 41 according to the invention (Examples) and comparative nickel-base alloy plates 11 to 20 (Comparative Examples) having the ingredient compositions shown in Tables 5 to 7.

In a similar process, low carbon-content starting materials were melted and cast in an ordinary high-frequency melting furnace, thereby producing 5 mm thick precision-cast ingots of the ingredient compositions shown in Table 6. These ingots were subjected to homogenizing heat treatment at 1230°C for 10 hours, then were water quenched. This procedure yielded a nickel-base alloy plate 42 according to the invention (Example).

A prior-art alloy plate 3 (Prior-Art Example) made of SUS304 stainless steel and having a thickness of 5 mm and a prior-art alloy plate 4 (Prior-Art Example) made of SUS316L stainless steel and of the same thickness were also prepared.

These inventive nickel-base alloy plates 22 to 41 (Examples), comparative nickel-base alloy plates 11-20 (Comparative Examples) and prior-art alloy plates 3 and 4 (Prior-Art Examples) were each cut into test pieces having a length of 10 mm and a width of 50 mm. The test pieces were surface polished by finishing with waterproof emery paper #400, following which they were ultrasonically degreased in acetone for five minutes.

A 1,000 ppm H₂SO₄ solution and a 500 ppm H₂SO₄ solution were prepared as test solutions which simulate the sulfuric acid acidic water that forms in the environment for forming a polymer electrolyte fuel cell. A 500 ppm HF solution and a 50 ppm HF solution were also prepared as test solutions which simulate the hydrofluoric acid acidic water that forms in the environment for forming a polymer electrolyte fuel cell. In addition, polypropylene test containers were prepared for use.

The test pieces from inventive nickel-base alloy plates 22 to 41 (Examples), comparative nickel-base alloy plates 1 1 to 20 (Comparative Examples) and prior-art alloy plates 3 and 4 (Prior-Art Examples) were individually placed, together with 200 ml portions of the test solutions prepared above, in the polypropylene test containers. These were then vacuum degassed in a glove box, and sealed by closure with a lid within a hydrogen atmosphere. These sealed polypropylene test containers were placed in a test chamber set at 80°C and held therein for 500 hours.

The polypropylene test containers were subsequently removed and cooled, following which the elements that leached out into the H₂SO₄ solutions and the HF solutions were quantitatively determined by inductively coupled plasma emission spectroscopy, and the total amount of metal ions that leached from each test piece was measured. This total amount of leached metal ions was divided by the surface area of the test piece to give the amount of leached metal ions per unit surface area. The results are shown in Tables 5 to 7.

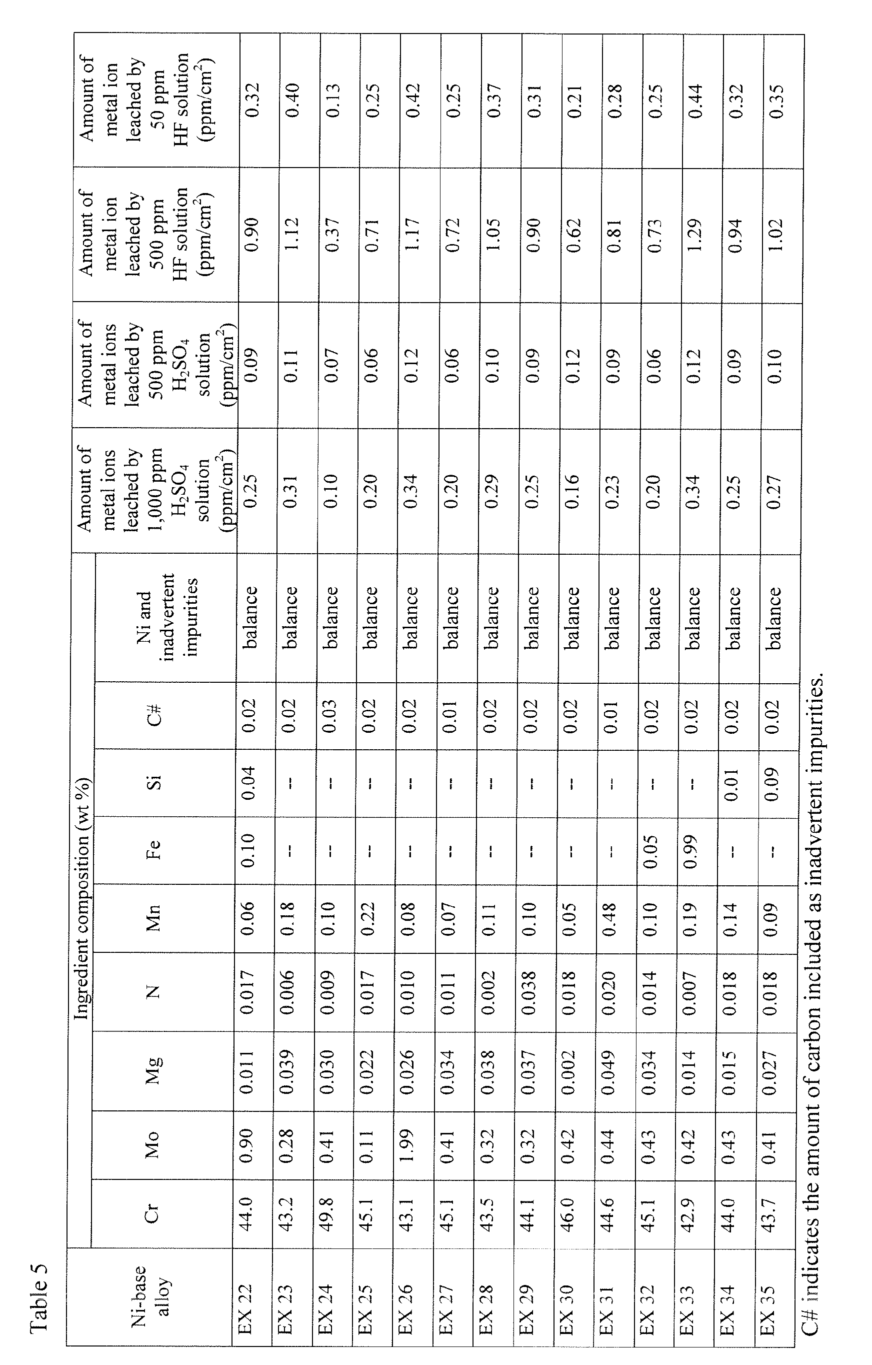

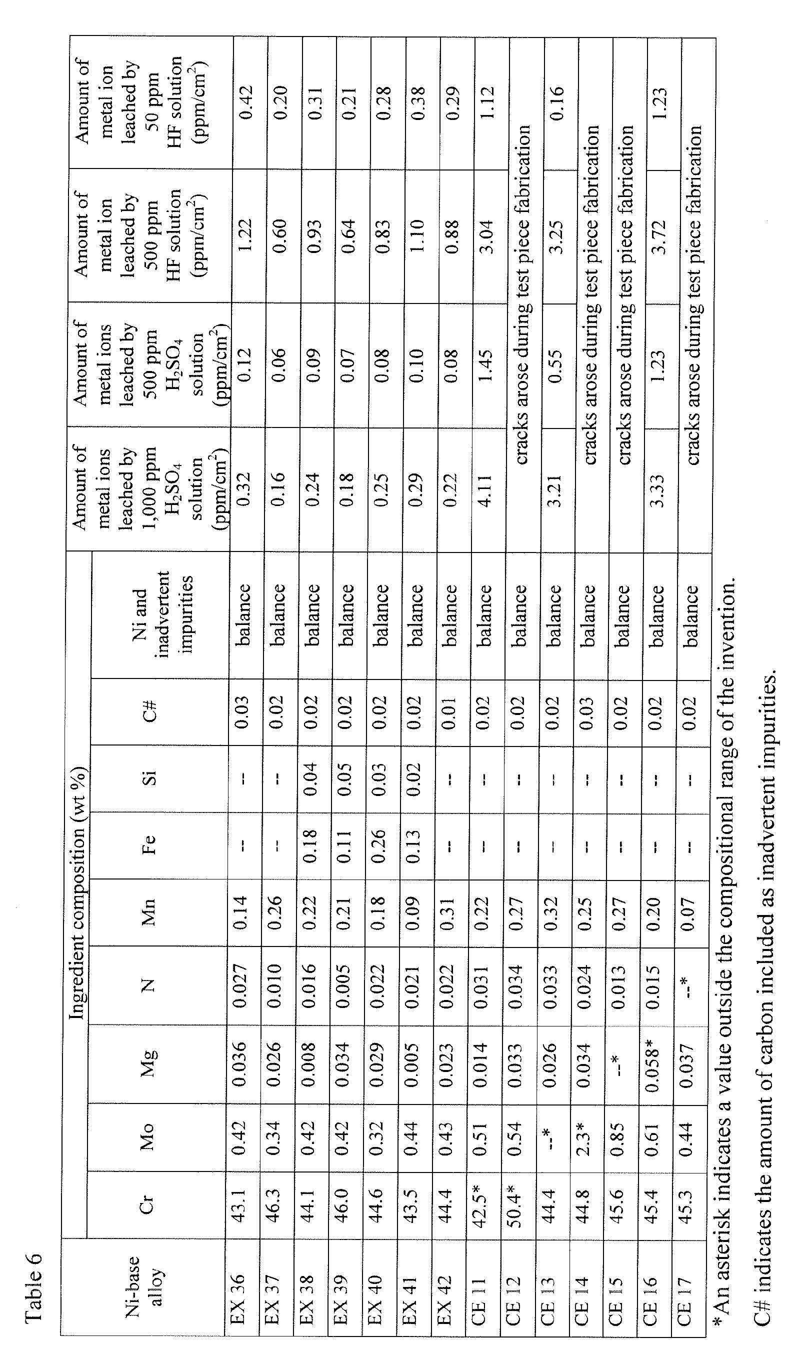

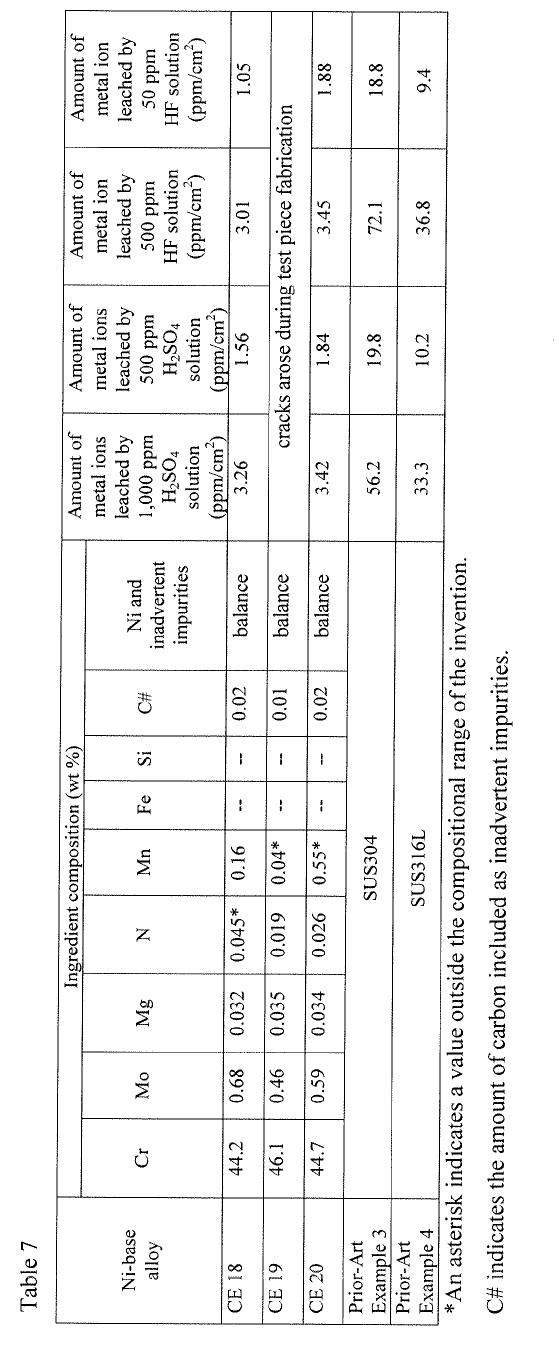

As is apparent from the results shown in Tables 5 to 7, the nickel-base alloy plates in Examples 22 to 42 according to the fifth and sixth aspects of the invention have much lower amounts of metal ion leached per unit surface area of the test pieces than the alloy plates 3 and 4 in Prior-Art Examples 3 and 4. The test pieces from the nickel-base alloy plates in Comparative Examples 11 to 20, which fall outside the scope of this invention, either had somewhat high amounts of metal ions leached or gave rise in most cases to cracks during machining of the test plates.

### INDUSTRIAL APPLICABILITY

The nickel-base alloys of the invention undergo very little leaching of metal ions in an environment for forming a polymer electrolyte fuel cell. Therefore, by assembling polymer electrolyte fuel cells using components made of the nickel-base alloys of the invention, deterioration of the solid electrolyte membrane can be suppressed, enabling polymer electrolyte fuel cells with a longer lifetime to be achieved. This invention will thus be of great industrial benefit.

As noted above, the nickel-base alloys of the invention are most effective when used in an environment for forming a polymer electrolyte fuel cell containing sulfuric acid or hydrofluoric acid. However, these nickel-base alloys are not limited only to use under such circumstances, and also undergo very little leaching of metal ions in an environment for forming a polymer electrolyte fuel cell containing formic acid. Furthermore, in addition to use in polymer electrolyte fuel cells, the inventive metal-base alloys can also be used to make components for drug manufacturing equipment from which the leaching of metal ions cannot be tolerated.

## Claims

1. A nickel-base alloy comprising, by mass, at least 29% but less than 42% chromium, more than 1% and not more than 3% tantalum, 0.001 to 0.05% magnesium, 0.001 to 0.04% nitrogen and 0.05 to 0.5% manganese, with the balance being nickel and inadvertent impurities, the amount of carbon included in the alloy as inadvertent impurities being not more than 0.05%.

2. A nickel-base alloy comprising, by mass, at least 29% but less than 42% chromium, more than 1% and not more than 3% tantalum, 0.001 to 0.05% magnesium, 0.001 to 0.04% nitrogen, 0.05 to 0.5% manganese and 0.1 to 2% molybdenum, with the balance being nickel and inadvertent impurities, the amount of carbon included in the alloy as inadvertent impurities being not more than 0.05%.

3. A nickel-base alloy comprising, by mass, at least 29% but less than 42% chromium, more than 1% and not more than 3% tantalum, 0.00 1 to 0.05% magnesium, 0.001 to 0.04% nitrogen, 0.05 to 0.5% manganese, and one or both of 0.05 to 1.0% iron and 0.01 to 0.1% silicon, with the balance being nickel and inadvertent impurities, the amount of carbon included in the alloy as inadvertent impurities being not more than 0.05%.

4. A nickel-base alloy comprising, by mass, at least 29% but less than 42% chromium, more than 1% and not more than 3% tantalum, 0.001 to 0.05% magnesium, 0.001 to 0.04% nitrogen, 0.05 to 0.5% manganese, 0.1 to 2% molybdenum, and one or both of 0.05 to 1.0% iron and 0.01 to 0.1% silicon, with the balance being nickel and inadvertent impurities, the amount of carbon included in the alloy as inadvertent impurities being not more than 0.05%.

5. A structural member for a polymer electrolyte fuel cell, which member is made of the nickel-base alloy according to claim 1, 2, 3 or 4.

6. A manifold member for a polymer electrolyte fuel cell, which member is made of the nickel-base alloy according to claim 1, 2, 3 or 4.

7. A pipe member for a polymer electrolyte fuel cell, which member is made of the nickel-base alloy according to claim 1, 2, 3 or 4.

8. A fastener member for a polymer electrolyte fuel cell, which member is made of the nickel-base alloy according to claim 1, 2, 3 or 4.

9. A support plate member for a polymer electrolyte fuel cell, which member is made of the nickel-base alloy according to claim 1, 2, 3 or 4.

10. A separator member for a polymer electrolyte fuel cell, which member is made of the nickel-base alloy according to claim 1, 2, 3 or 4.

11. A nickel-base alloy comprising, by mass, more than 43% and not more than 50% chromium, 0.1 to 2% molybdenum, 0.001 to 0.05% magnesium, 0.001 to 0.04% nitrogen, and 0.05 to 0.5% manganese, with the balance being nickel and inadvertent impurities, the amount of carbon included in the alloy as inadvertent impurities being not more than 0.05%.

12. A nickel-base alloy comprising, by mass, more than 43% and not more than 50% chromium, 0.1 to 2% molybdenum, 0.001 to 0.05% magnesium, 0.001 to 0.04% nitrogen, 0.05 to 0.5% manganese, and one or both of 0.05 to 1.0% iron and 0.01 to 0.1% silicon, with the balance being nickel and inadvertent impurities, the amount of carbon included in the alloy as inadvertent impurities being not more than 0.05%.

13. A structural member for a polymer electrolyte fuel cell, which member is made of the nickel-base alloy according to claim 11 or 12.

14. A manifold member for a polymer electrolyte fuel cell, which member is made of the nickel-base alloy according to claim 11 or 12.

15. A pipe member for a polymer electrolyte fuel cell, which member is made of the nickel-base alloy according to claim 11 or 12.

16. A fastener member for a polymer electrolyte fuel cell, which member is made of the nickel-base alloy according to claim 11 or 12.

17. A support plate member for a polymer electrolyte fuel cell, which member is made of the nickel-base alloy according to claim 11 or 12.

18. A separator member for a polymer electrolyte fuel cell, which member is made of the nickel-base alloy according to claim 11 or 12.
